# EUROPEAN PATENT APPLICATION

(11) **EP 1 403 838 A1**
(43) Date of publication of application: **31.03.2004**
(21) Application number: 02425583.8
(22) Date of filing: 27.09.2002
(51) Int. Cl.: G09B 9/04, A61B 5/16

(54) **Apparatus for contest among competitors**

(71) Applicant: Dorado C.I.G.S. S.p.A., 43040 Varano De' Melegari (PR) (IT)
(72) Inventor: De Adamich, Andrea, 43040 Varano de' Melegari (PR) (IT); Brambilla, Vittorio, 27049 Stradella (PV) (IT)
(74) Representative: Simino, Massimo

(57) **Abstract**

An apparatus (1) for contest among competitors generates for each competitor a global index (GI) of performance. The contest comprises practical exercises, in which each competitor moves in a real environment (2) by a vehicle (3), and simulated exercises, in which each competitor moves in a virtual reality by a simulator (4). The apparatus comprises sensing means (5, 6, 7) for detecting the actual positions of the vehicle (3), actual data and virtual data of the simulator (4), and processing means (8) generating actual parameters (P_{A}) and virtual parameters (P_{V}) depending on the detected data.

The processing means (8) generate a first group of indexes (FI) and a second group of indexes (SI), and the global index (GI) of performance is a function of these indexes (FI, SI).

## Description

The present invention relates to an apparatus for contest among competitors according to the precharacterizing portion of claim 1.

It is known about electronic systems simulating vehicle driving, in particular motorcars and motorbikes, in which the user sits in front of a screen on which a real circuit and a real vehicle are virtually reproduced.

The user can thus evaluate his own driving performances through virtual means which allows to carry out maneuvers which would be dangerous for the user's health in real life.

In addition, it is possible to organize contests among competitors using said simulator and obtaining a final classification which takes into consideration the time spent by each competitor in the test.

It is also known about competitions on a racing track in which each competitor is given a vehicle with which he can face various driving ability tests or racetrack speed tests similar to Grand Prix.

In particular driving ability tests, carried out for instance during a safe driving course, aim not only at evaluating one's own ability, but also at learning techniques for safe driving to be used, if necessary, in everyday driving.

The evaluation of candidates taking part in the safe driving course is based on qualitative principles and on judger's subjective parameters, which therefore compromises the objectivity which should be the main feature of such training courses.

Moreover, most safe driving courses known at the state of the art do not provide for tests to be carried out with a simulator, and if present, such tests give an evaluation parameter which is disjoined from road driving evaluations.

As a consequence there is a strong need for an apparatus allowing to carry out objective evaluations of the candidates taking part in the various tests carried out during safe driving courses.

In particular, to this purpose it is necessary to provide for an apparatus which can detect a significant number of parameters of the car on the racetrack and compare them with a predetermined set of parameters which are chosen before the tests.

Furthermore, it is necessary to use a driving simulator in order to evaluate the competitor's potential ability, which might not have been expressed on the racetrack due to qualms concerning the use of a car up to its mechanical limits, and to fears concerning his own physical safety.

The evaluation of the test carried out on the simulator should anyway take into consideration various aspects and parameters, among which those which have been predetermined.

Eventually, the global evaluation of the performance of each participant in the contest should be based both on racetrack and simulator tests, comparing the parameters with the predetermined ones in order to obtain a judgment which is as objective and impartial as possible.

The problem underlying the present invention is to provide an apparatus for contest among competitors with such features as to satisfy the aforesaid needs and to avoid at the same time the drawbacks that have been mentioned concerning the state of the art.

Such problem is solved by an apparatus for contest among competitors according to claim 1.

Further characteristics and the advantages of the apparatus according to the present invention will be evident from the following description, which has a mere indicative and non-limiting purpose, with reference to the enclosed figures, in which:

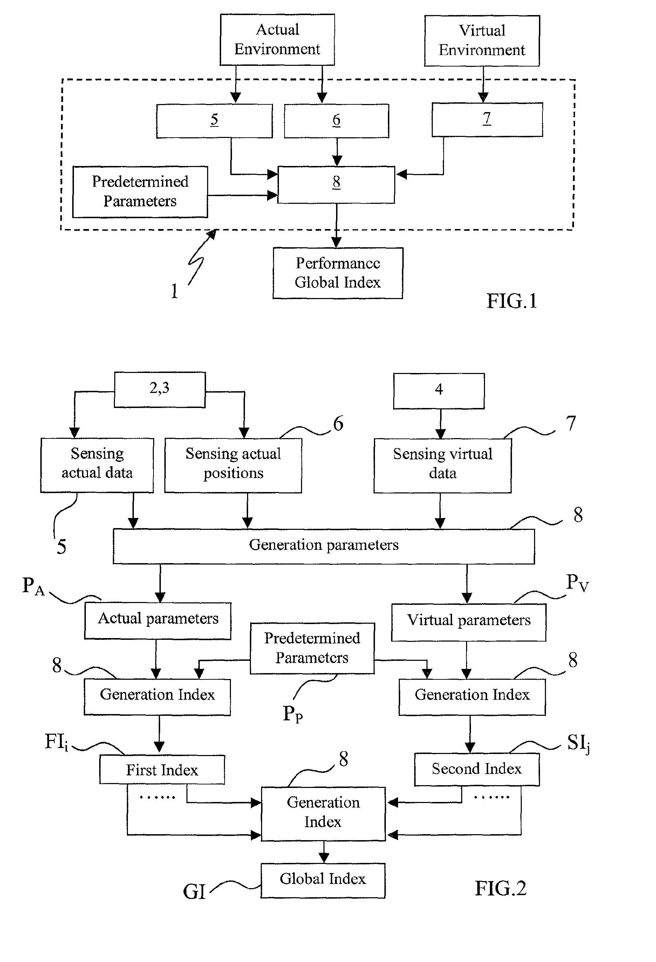

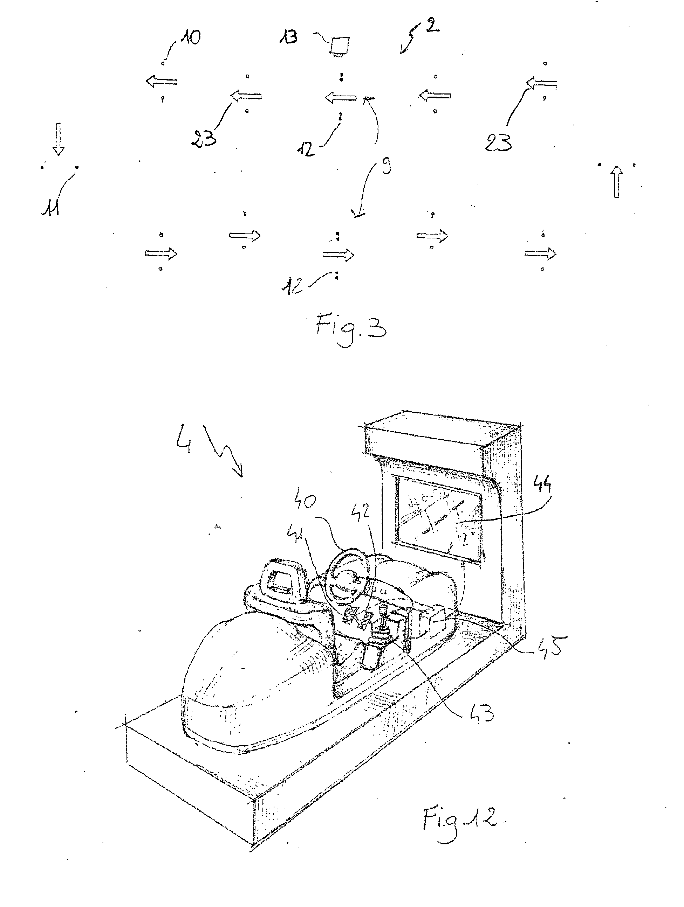

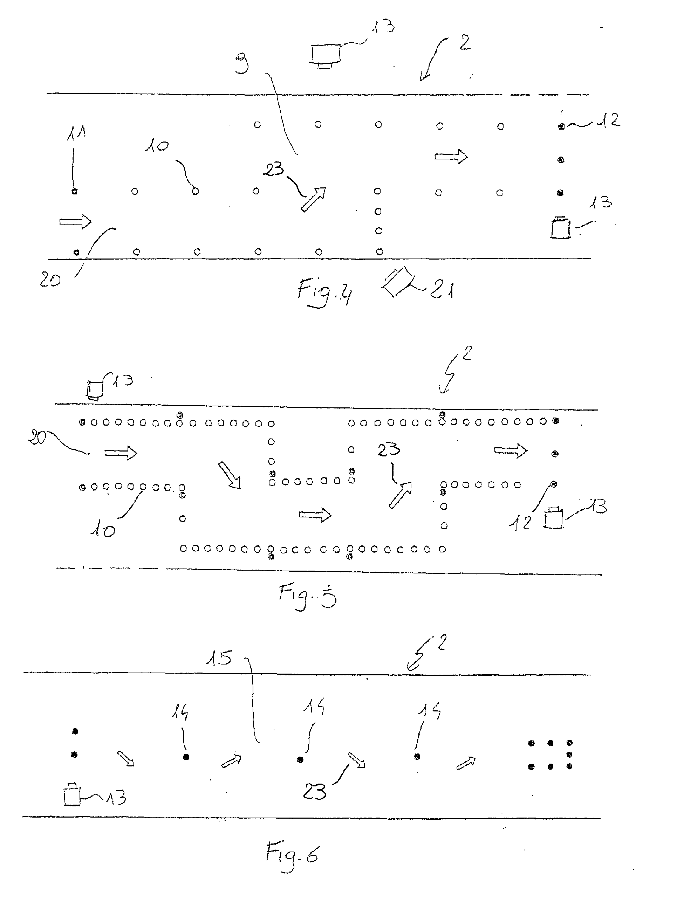

- Figure 1 shows a block diagram of the apparatus according to the present invention,
- Figure 2 shows a block diagram of the method according to the present invention,
- Figures 3-10 show diagrams of practical exercises in a contest using the apparatus of Figure 1,
- Figure 11 shows a diagram of a detail of the apparatus of Figure 1,
- Figure 12 shows a diagram of a detail of the apparatus of Figure 1.

With reference to the enclosed figures, the numeral 1 globally indicates an apparatus for contest among competitors.

In particular, the following description refers to an apparatus 1 to be used for car competitions, provided that the apparatus 1 can be used for different contests and vehicles.

The competition takes place in two different steps: in the first step each competitor carries out a series of tests, or practical exercises, in a suitable activity area, for instance a road route 2 or a racetrack circuit or path 60 closed to traffic, by a vehicle 3. The vehicle 3 can be an usual car or a racing car; in the second step each competitor carries out a series of tests or simulated exercises with a driving simulator 4 (Fig. 12).

Each competitor carries out the first step with a vehicle that can be the same for all competitors or each participant to the competition can be provided with a vehicle.

At the end of the competition the apparatus 1 provides a global index GI of performance for each competitor, thus allowing to draw up a competitors final classification and to establish the winner.

The apparatus 1 comprises sensing means 5 for detecting the actual positions of the vehicle 3 driven by each competitor within the area 2, sensing means 6 for detecting a plurality of actual data, sensing means 7 for detecting a plurality of virtual data of the simulator 4 and processing means 8.

The processing means 8 process the actual positions detected by the means 5 and the actual data detected by the means 6 in order to generate actual parameters P_{A} of the vehicle 3.

Moreover, the processing means 8 process the virtual data detected by the means 7 in order to generate virtual parameters P_{V} of the simulator 4.

The actual parameters P_{A} thus obtained are processed together with predetermined parameters P_{P} of the competition by the processing means 8 which generate, for each competitor, a first index of performance FIᵢ for each practical exercise.

It is thus possible to obtain a first group of indexes FI comprising the indexes generated FIᵢ for each practical exercise carried out by the competitor, "i" being the number of practical exercises carried out by each competitor.

The virtual parameters P_{V} obtained are processed together with the predetermined parameters P_{P} of the competition by the processing means 8 which generate for each competitor a second index of performance SIⱼ for each simulated exercise.

Similarly to what has been described for the practical exercises, it is possible to obtain a second group of indexes SI comprising the indexes generated SIⱼ for each simulated exercise carried out by the competitor, "j" being the number of simulated tests carried out with the simulator 4 by each competitor.

The predetermined parameters P_{P} can be for instance parameters obtained by professional pilots whose driving ability is higher than amateur pilots, and therefore such predetermined parameters P_{P} are to be considered as ideal parameters to be compared with the virtual parameters P_{V} and the actual ones P_{A}, respectively obtained in practical and simulated exercises. Alternatively said predetermined parameters P_{P} can be reference parameters used for the comparisons of practical and simulated tests.

In case some of the practical or simulated tests do not give any actual or virtual data, the index of performance for said tests is determined through subjective parameters, for instance the judgment of an umpire.

For instance, there can be some exercises in which it is not easy to identify parameters through data acquisition both from the vehicle and from the simulator, as will be shown in the following example of a practical application of the apparatus 1.

The indexes of the first group and the indexes of the second group are used to identify the global index of performance GI.

Such an operation can be carried out through the processing means 8 or, alternatively, through a simple arithmetical operation between the indexes of the first group FI and the indexes of the second group SI.

It is necessary to provide the possibility that the indexes of the first group FI may be used to form a single first index of the practical exercises, and, in the same way, the indexes of the second group SI form a single index of the simulated exercises.

This single first and second index will be used to generate the global index GI of performance, as explained for the first FI and second SI group of indexes.

According to a preferred embodiment the sensing means 5 comprise a track signal transmitter and a track signal receiver of the known type, which can detect the positions of the vehicle 3 moving within the area 2.

The receiver is mounted for instance onto the vehicle 3, whereas the transmitter is placed in a fixed position on the ground within the activity area 2, so as to intercept the receiver. Advantageously, the transmitter is a high-power infrared optical transmitter with a light beam large enough to be used in all conditions of visibility.

Alternatively, the sensing means 5 can be carried out through a satellite acquisition system (GPS), well known to a technician skilled in the art and therefore not described in the following.

Advantageously, the sensing means 6 comprise a plurality of sensors and timing devices.

The sensors are for instance: vehicle sensors detecting vehicle data or environmental sensors detecting environmental data.

Vehicle sensors comprise linear position transducers, angular position transducers, speed transducers, acceleration transducers and pressure transducers.

Vehicle sensors are essential in order to detect the vehicle data from the vehicle 3 during the first competition step in which each competitor performs a series of different tests within the area 2, which are described in detail in the following.

In particular, through the vehicle sensors it is possible to acquire vehicle data concerning acceleration progression and momentum, braking intensity and modulation, lateral acceleration, steering progression and angle.

Environmental sensors comprise hygrometers, anemometers, barometers and temperature transducers.

Environmental sensors are essential in order to detect the plurality of actual data from the environment surrounding the activity area 2 within which the vehicle 3 related to a competitor moves.

In particular, through the environmental sensors it is possible to acquire environmental data concerning wind speed and direction, air and soil temperature, atmospheric humidity and pressure.

Obviously other data can be detected by the vehicle sensors and the environmental sensors listed above.

According to a preferred embodiment the sensing means 7 comprise a plurality of simulator sensors connected to the simulator 4 for detecting a plurality of virtual data of the simulator.

The simulator 4 (see Figure 12) consists in its simplest form of the following elements:
- a whole car or a portion of it,
- a plurality of sensors connected to actual driving devices of the simulator (steering gear, foot-brake pedal, accelerator pedal and gear lever),
- analogical-digital control units acting as interface between the simulator sensors and the processing means 8.

In particular, through the simulator sensors it is possible to acquire a plurality of virtual data of the simulator concerning braking/accelerating intensity and modulation and steering angle.

As previously stated, the first index FIᵢ and the second index SIⱼ of performance are generated by the processing means 8 by processing the data detected by the sensing means 5, 6 and 7.

A preferred processing embodiment consists in comparing the data detected by the sensing means 5, 6 and 7.

In particular, as already described, the first index FIᵢ of performance is generated by comparing the actual parameters P_{A} with the predetermined parameters P_{P}, whereas the second index SIⱼ of performance is generated comparing the virtual parameters P_{V} with the predetermined parameters P_{P}.

It should be pointed out that the first index FIᵢ of performance is a performance index of each competitor and refers to a practical exercise carried out during the competition, whereas the second index SIⱼ of performance is an index of performance of each competitor and refers to a simulated exercise.

In other words, while carrying out several practical exercises a first performance index FIᵢ is associated to each competitor for each practical exercise, so as to obtain a first group of indexes FI including all practical tests performed by the competitor, as well as while carrying out several simulated exercises a second performance index SIⱼ is associated to each competitor for each practical exercise, so as to obtain a second group of indexes SI including all simulated tests performed by the competitor.

It should be noted that the number "i" of practical exercises and the number "j" of simulated exercises can also be identical.

So that the simulated exercise bears significance for the evaluation of each competitor, the activity area 2 in which the practical exercises take place is substantially reproduced in the simulator 4.

For instance, the asphalt and atmospheric conditions, the racetrack area where the tests take place, are virtually simulated through the simulator 4.

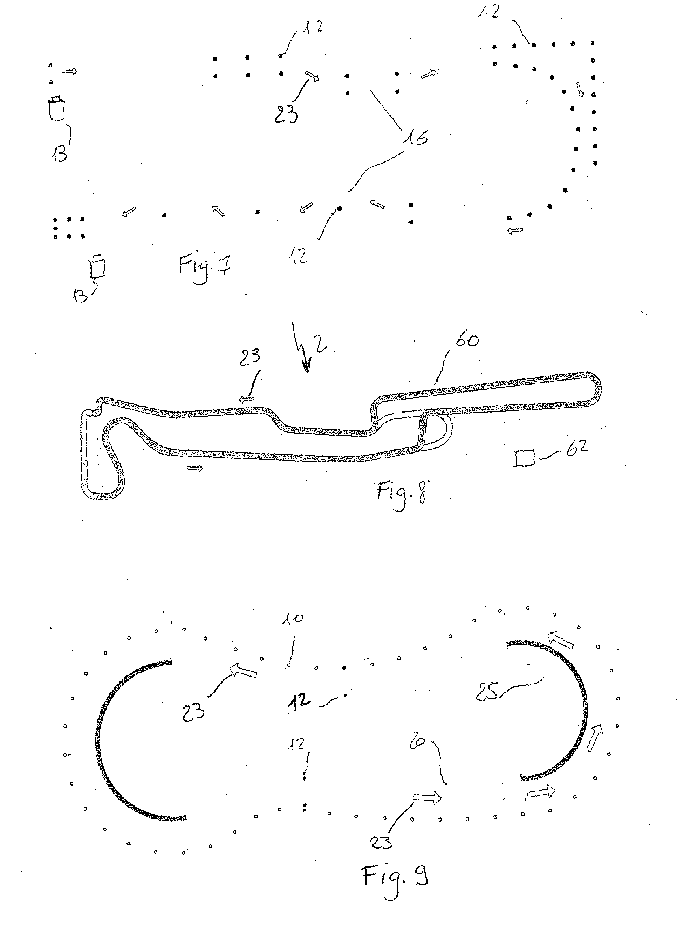

The apparatus 1 described above according to the present invention can be used in a safe driving competition, which is hereinafter disclosed as a mere non-limiting example with reference to the enclosed Figures 3-10.

Such competition provides with a final classification based on dynamic driving tests carried out on-road with a car and on virtual driving tests carried out in a simulator, which bring out the quality and the confidence of the participants in the competition.

First of all, it is necessary to find out suitable activity areas with predefined requirements. In particular, for road driving tests the following elements are required:
- an area closed to traffic during the competition, without obstacles compromising the participants safety and having global size fitting the number and type of tests, in the example at least of 10,000 square meters,
- an asphalted road without imperfections compromising the dynamic activity of the cars,
- stationary or mobile toilets by the activity area,
- establish the test layout with delimitation traffic signs and signposts at a distance of at least five meters from the asphalted area for carrying out the various tests,
- shielding structures for the public, consisting of fences and mobile barriers preventing the access to the operational areas,
- provide for an artificial raining system consisting of spraying irrigators connected to hydrants, allowing to continuously wet the areas in which the road tests take place and having a capacity for instance of 15 liters/sec. of supplied water; alternatively, other devices can be used to the same purpose,
- finally delimit the areas used for car control exercises with differently colored cones, placing a cone every five meters within both the rectilinear and the curvilinear activity area.

The safe driving competition consists of practical and virtual exercises, each resulting in a score and, subsequently, in a final classification.

The score of the practical exercises corresponds to the first group of performance indexes FI, whereas the score of the dynamic exercises corresponds to the second group of performance indexes SI.

During the competition each competitor faces a series of ability tests which are for the first step:
- Miniskid Car (i=1)
- Braking with dodge of obstacle (i=2)
- Abrupt dodge at high speed (i=3)
- Slalom (i=4)
- Active safety path (i=5)
- Regularity test (i=6)
- Dynamic telemetry (i=7)
- Curve over-steering (i=8)
- Curve under-steering (i=9)
and for the second step
- Virtual driving test (j higher than, lower than or equal to i).

The present invention will now describe the practical tests for each of which it is always possible to identify and detect actual parameters and compare them with predetermined parameters by means of a processing unit, so as to generate a plurality of performance indexes FIᵢ for each test that is executed.

The same applies to the generation of the plurality of performance indexes SIⱼ.

As a matter of fact, the sensing means 5 detect the positions of the vehicle on the path, whereas the sensing means 6 detect a plurality of data both from the vehicle and from the surrounding environment.

In particular, accelerometers 30 and angular speed transducers 31 are mounted on the vehicle in order to detect the driving data referring to the vehicle 3, together with a position tracker detecting the positions of the vehicle 3 on the path 60.

The position tracker consists of a track signal receiver 61 mounted on the vehicle and of a track signal transmitter 62 placed on the ground within the area 2.

The data detected by the means 5 and 6 can be sent to the ground in real time or they can be stored in physical storages installed on the vehicle 3, and are displayed on the vehicle dashboard 32.

At the end of the practical exercise the stored data are sent to the processing means 8 to be processed.

Said processing means 8 process the aforesaid detected data in order to generate the actual parameters P_{A} of the vehicle.

Said parameters are then compared with the predetermined parameters P_{P} in order to generate the performance index FIᵢ for the current exercise.

The penalties associated to each competitor for this test depend on the deviation between the predetermined parameters and the actual parameters detected on the racetrack.

Moreover, depending on the atmospheric conditions detected for each competitor in each practical test, it is possible to take into consideration such weather changes while generating the performance indexes FIᵢ and SIⱼ.

The Miniskid Car test (Fig. 3) is carried out with a mechanical system lifting the rear axle of a vehicle with front-wheel drive on pivoting wheels, of the known type not shown in the figures, which makes the vehicle slide at low speed.

In order to perform this test a path 9 is prepared which is delimited by cones 10, 11, 12, which each competitor has to go through in as little time as possible, trying not to crash into cones and following exactly the predetermined path 9.

The numeral 23 in Figures 3-10 indicates the direction of a vehicle 3 on various paths each time prepared for performing the test in question.

A chronometer 13 is used for timing the lap and recording the best lap made by each participant adding up the penalties occurred in each lap for crashing one or more cones or for skipping the gate. For detecting run times known types of timing devices 13 are used, placed on a predetermined point of the racetrack 9.

In particular, the timing devices can be positioned by the cones 13 placed on the rectilinear portion of the racetrack 9.

For instance, pulse chronometers with photoelectric cells are used to detect the positions of the vehicle.

Depending on the actual data detected, the processing unit 8 generates actual parameters P_{A} describing the competitor's performance from a quantitative point of view.

An example of actual parameters P_{A} is the time required for carrying out the test.

The smaller is the difference between the actual datum detected and the predetermined one, the higher will be the performance index associated to the current test.

As predetermined parameter P_{P} it is possible to choose both a reference time, for instance the instant "0" when the test starts, or a predetermined time for completing the test, previously established by a professional pilot.

The processing unit 8 will thus generate a first index FIᵢ₌₁ as a function of the predetermined parameters P_{P} and of the generated actual parameters.

The test consisting in braking with dodge of obstacle (Fig. 4) is carried out using a vehicle equipped with an ABS, braking sharply on a low-adherence surface.

The execution of the test consisting in braking with dodge of obstacle requires a launching lane 20 directed towards the test area, which has to be permanently wetted with an artificial raining system.

The activity area 2 in which the dodging test is carried out is delimited by means of cones 10, 11, 12 in order to set the correct dodge path and identify the braking point.

At the beginning of the braking point photocells 13 are placed, which indicate the going through speed of the vehicle 3.

A laser pointer 21 detects the vehicle arresting distance with respect to the predetermined braking point. Also in this case, the smaller is the difference between the actual datum detected and the predetermined datum, the higher will be the performance index associated with the current test.

On the basis of the actual data detected, the processing unit 8 generates actual parameters P_{A} describing the competitor's performance from a quantitative point of view.

Actual parameters P_{A} are for instance the time required for carrying out the test or the arresting time.

The processing unit 8 will thus generate a first index FIᵢ₌₂ as a function of the predetermined parameters P_{P} and of the generated actual parameters.

As predetermined parameter P_{P} it is possible to choose both a reference time, for instance the instant "0" when the test starts, or a predetermined time for completing the test or for arresting, as previously established by a professional pilot as described analogously for the previous test.

The same will apply for the tests described below, where said idea will not be repeated for sake of simplicity.

Penalties deriving from crashing into cones are then taken into consideration, together with possible detections of vehicle going through speed below the predetermined value.

Each competitor can perform several laps and the final score is calculated on the best score recorded. Other methods can obviously be used for determining the final score, though always keeping the comparison with the predetermined parameters.

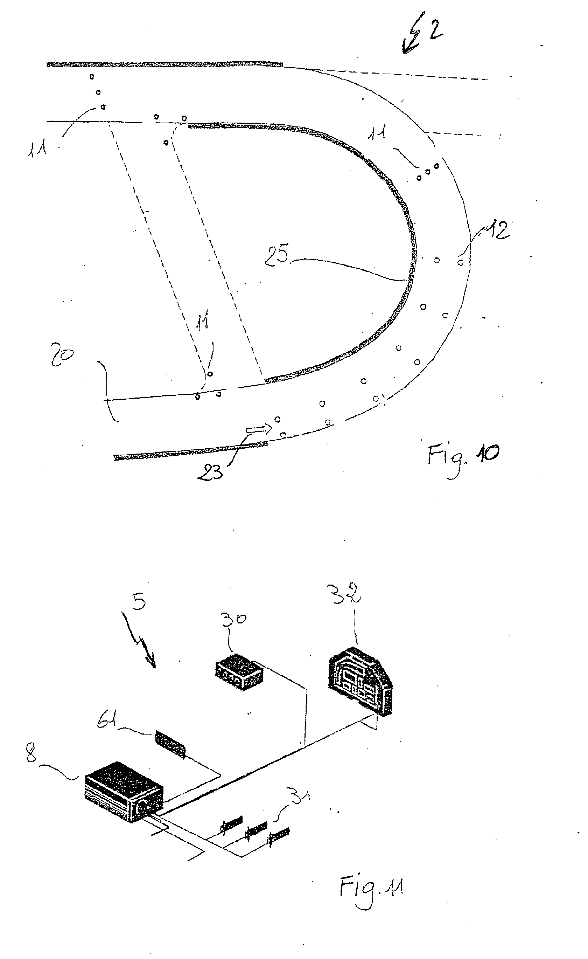

The test consisting in dodging at high speed (Fig. 5) is an exercise aiming at controlling a sudden dynamic inversion in vehicle loads, due to an abrupt dodge at high speed in order to dodge an obstacle on the road.

The execution of the dodging test requires a launching lane 20 directed towards the area where the exercise takes place. The activity area 2 used as dodging area is delimited by cones 10, 12 so as to set the correct dodging path.

A series of photocells 13 placed at the beginning and at the end of the dodging area are used in this exercise to detect the going through speed of the vehicle 3.

By means of the photocells 13 the going through speeds are detected, in function of which rises the test score.

In order to generate the performance index FIᵢ₌₃ for this test, penalties deriving from crashing into cones are also taken into consideration, together with possible detections of speeds below predetermined parameters.

Also in this case each competitor can perform several laps and the final score is calculated on the best score recorded. Other methods can obviously be used for determining the final score, though always keeping the comparison with the predetermined parameters.

The slalom test (Fig. 6) is an exercise involving coordination and sensitivity used to establish the competitor's ability in case of a load transfer on the vehicle due to acceleration/release of the accelerator.

The exercise provides that each competitor makes a fast slalom with a given gear on a path 15 delimited by cones 14 placed at a given distance one from the other so as to create a path with a given number of gates.

A timing device 13 detects time. In order to generate the performance index FIᵢ₌₄ for this test several laps of each competitor are taken into consideration, and the final score is calculated on the best lap.

In addition, penalties for crashing into cones or for skipping a gate are taken into consideration, which contribute to the generation of the performance index for this test.

The active safety path test (Fig. 7) is an exercise evaluating the ability of each competitor in a situation requiring the intervention of the active safety systems of the vehicle.

The execution of this exercises requires a path 16 delimited by cones 12, including different road-beds with different characteristics of adherence.

Dry portions are alternated for instance to portions wetted with artificial rain, in which each competitor has to cover the portion in as little time as possible trying not to crash into the cones that delimit the predefined path.

A timing device 13 as previously described is used to detect lap times.

Each candidate makes several laps and the final score FIᵢ₌₅ takes into consideration the best lap made.

In addition, there are penalties for crashing into cones and for skipping gates, which contribute to generate the performance index for this test.

The regularity test is an exercise aiming at bringing out driving precision, which together with a correct trim and technique allows to optimize the various driving stages executing fluently the correct curve paths, braking in the right way and using the vehicle control means with sensitivity and progression.

The path 60 of the circuit within the activity area 2 is a test path to be covered by each competitor with subsequent laps, aiming at obtaining times which are as near as possible one to the other.

Indeed the deviation between two subsequent times detected results in a penalty contributing to modify the performance index FIᵢ₌₆ of the test.

The smaller is the difference between the times detected in two subsequent laps, the higher will be the performance index attributed to this exercise.

The dynamic telemetry test (Fig. 8) is an exercise aiming at bringing out the correct driving trim and quality of each competitor through the analysis of objective driving parameters resulting from the detection of the data concerning the driving style of each participant.

In particular, acceleration progression and momentum, braking intensity and modulation, vehicle lateral acceleration and steering angle are detected.

By means of these actual data detected from the vehicle it is possible to generate through processing a series of parameters characterizing the driving style of each competitor.

Examples of parameters are the following: incoming and outcoming curve speed, lateral acceleration in curve, control while braking and in rectilinear path.

Since the definition of these parameters is quite difficult, the use of the apparatus 1 according to the present invention is particularly advantageous and allows to define objectively the large number of parameters of this test.

The processing means 8 of said apparatus 1 allow to process the detected data in order to generate the aforesaid parameters and to use the latter as term of comparison with a set of predetermined parameters.

The processing means 8 thus generate a performance index FIᵢ₌₇ for this test by comparing the predetermined parameters with the actual ones.

For this test each competitor has to drive on a mixed road path, with various types of curves, not shown in the figures.

The path can be both the racetrack circuit 60 or a road path suitably prepared. In the examples the racetrack circuit 60 is used as test path which is to be covered by each competitor in sequence.

The test consisting in curve over-steering (Fig.9) is an exercise aiming at controlling the vehicle during a curve, when the rear axle loses adherence due to the transfer of longitudinal load caused by the slowing down during driving.

The execution of the test consisting in curve over-steering requires a launching lane 20 to be covered at a constant speed before taking a curve 25, which is artificially wetted so as to reduce the adherence coefficient of the road-bed.

The performance index FIᵢ₌₈ for this test is determined by a group of experts. For this specific case it is preferred not to use the apparatus 1 according to the present invention even though it is possible to find actual parameters to be used for the test.

This means for instance detecting data about steering movements, lateral acceleration, pressing strength on brake and accelerator pedal curve path followed.

Analogously, in the test involving curve under-steering (Fig.10) the performance index FIᵢ₌₉ is determined by a group of experts.

Examining now the virtual driving test, the latter includes exercises on a driving simulator 4.

The simulator 4 substantially reproduces the actual path on which each competitor has carried out the practical exercises.

The simulator 4 is provided with a steering wheel 40, an accelerator 42, a brake 41, a gear 43 and a display 44 virtually reproducing a driving path and a real environment.

The simulator 4 is further equipped with a processing device 45 of a known type, which processes the signals coming from the driving elements 40, 41, 42, 43 for reproducing their effects on the display 44.

Moreover, the processing device 45 enables the connection with the processing unit 8 which processes the virtual data detected by the simulator.

The simulator simulates the actual vehicle dynamics using data which have previously been acquired on the path where the tests take place.

The performance index SIⱼ of the simulated test is generated by the processing unit 8 by comparing the virtual parameters P_{V} of the simulated test with the predetermined ones P_{P}.

The tests simulated with the simulator 4 can be the same as the actual ones, or others conceived on purpose to test the competitor's ability. Also in this second step the virtual parameters P_{V} are generated by the processing unit 8, which processes the virtual data detected by the simulator 4. The greater is the deviation between the predetermined parameters P_{P} and the virtual ones P_{V}, the greater will be the penalties assigned to each competitor.

For instance, one of the simulated tests which is not included within the practical exercises is the reaction test, where the competitor has to face a dangerous and sudden virtual situation on the road, which the competitor has to react to as fast as possible and in a suitable way.

The simulator reproduces a virtual road on which the vehicle moves at a given speed and on which sudden obstacles appear, such as for instance still vehicles, walls, animals.

The sensors mounted on the simulator allow to detect the competitor's reaction times before the obstacle and the path followed to dodge it.

The index of this test SIⱼ₌₁ is generated by comparing predetermined reaction parameters and assigning penalties for reaction mistakes.

From the above description it is evident that the apparatus for contest 1 allows to generate a performance index for each competitor in an objective and impartial way, so as to obtain an unquestionable judgment on each competitor.

As can be inferred from the description, the apparatus 1 according to the invention allows to meet the requirements as specified in the introduction to the present description, and at the same time to overcome the drawbacks of the prior art.

Indeed, through the apparatus 1 according to the invention it is possible to generate a global index GI of performance based on the practical and simulated tests carried out by each competitor.

A technician skilled in the art aiming at meeting contingent and specific needs can obviously make several changes and variations to the apparatus for contest described above, all of them further being included in the protection field of the invention as defined in the following claims.

## Claims

1. Apparatus (1) for contest among competitors generating for each competitor a global index of performance (GI), said contest consisting of a first step, comprising one or more practical exercises, in which each competitor moves in a real environment (2) by a vehicle (3) and of a second step, comprising one or more simulated exercises, in which each competitor moves in a virtual reality by a simulator (4), said apparatus comprising
- first sensing means (5) detecting the actual positions of the vehicle (3) in the real environment (2) in each practical exercise (i),
- second sensing means (6) detecting a plurality of actual data in each practical exercise (i),
- third sensing means (7) detecting a plurality of virtual data of the simulator (4) in each simulated exercise (j),
- processing means (8) adapted for
processing said actual positions and said plurality of actual data so as to generate actual parameters (P_{A}) of the vehicle (3), and for
processing said plurality of virtual data so as to generate virtual parameters (P_{V}) of the simulator,
**characterized in that** said processing means (8)
further process said actual parameters (P_{A}) and predetermined parameters (P_{P}) of the contest so as to generate, for each competitor, a first index (FIᵢ) of performance for each practical exercise obtaining a first group of indexes (FI), and
process said predetermined parameters (P_{P}) and said virtual parameters (P_{V}) so as to generate, for each competitor, a second index (SIⱼ) of performance for each simulated exercise obtaining a second group of indexes (SI),
said global index (GI) of performance being function of at least one index of said first group (FI) and of at least one index of said second group (SI).

2. Apparatus (1) according to claim 1, wherein said first index (FIᵢ) of performance is generated by comparing said actual parameters (P_{A}) with said predetermined parameters (P_{P}).

3. Apparatus (1) according to claim 1, wherein said second index (SIⱼ) of performance is generated by comparing said virtual parameters (P_{A}) with said predetermined parameters (P_{P}).

4. Apparatus according to claim 1, wherein said first sensing means (5) comprise a track signal transmitter (62) and a track signal receiver (61).

5. Apparatus according to claim 4, wherein said first sensing means (5) comprise a GPS satellite system.

6. Apparatus according to claim 1, wherein said second sensing means (6) comprise a plurality of sensors (31, 30, 32) and timing devices (13, 21).

7. Apparatus according to claim 6, wherein said plurality of sensors consists of vehicle sensors.

8. Apparatus according to claim 7, wherein said vehicle sensors comprise linear position transducers, angular position transducers, speed transducers, acceleration transducers and pressure transducers.

9. Apparatus according to claim 6, wherein said plurality of sensors consists of environmental sensors.

10. Apparatus according to claim 9, wherein said environmental sensors comprise hygrometers, anemometers, barometers and temperature transducers.

11. Apparatus according to claim 1, wherein said plurality of actual data comprise data concerning the vehicle (3) and environmental data.

12. Apparatus according to claim 1, wherein said data concerning the vehicle (3) comprise acceleration progression and momentum, braking intensity and modulation, lateral acceleration, steering progression and angle.

13. Apparatus according to claim 10 and 11, wherein said environmental data comprise wind speed and direction, air and soil temperature, atmospheric humidity and pressure.

14. Apparatus according to claim 1, wherein said third sensing means (7) comprise a plurality of simulator sensors connected to actual devices of the simulator.

15. Apparatus according to claim 14, wherein said actual devices of the simulator (4) comprise a steering wheel (40), a gear lever (43), an accelerator pedal (42) and a brake pedal (41) .

16. Apparatus according to claim 1, wherein said plurality of virtual data of the simulator (4) comprise braking/acceleration intensity and modulation and steering angle.

17. Apparatus according to claim 1, wherein said actual parameters (P_{A}), virtual parameters (P_{V}) and predetermined parameters (P_{P}) are for instance incoming and outcoming curve speed, lateral acceleration in curve, control while braking and in rectilinear path, atmospheric conditions, time duration of the exercises and penalties occurred.

18. Apparatus according to claim 1, wherein said processing means (8) comprise an electronic processing unit.

19. Apparatus according to claim 1, wherein said real environment (2) comprises one or more different path (60, 9).

20. Apparatus according to claim 1, wherein said virtual reality substantially reproduces said real environment (2).

21. Apparatus according to claim 1, wherein said vehicle (3) is a motorcar or motorbike.

22. Method for generating a global index (GI) of performance for a contest, among competitors, having predetermined parameters (P_{P}), said contest comprising practical exercises in which each competitor moves in a real environment (2) by a vehicle (3), and simulated exercises in which each competitor moves in a virtual reality by a simulator (4), said method comprising the following steps:
- detect the actual positions of the vehicle (3),
- detect actual data,
- detect virtual data,
- generate actual parameters (P_{A}) depending on said actual positions and said actual data,
- generate virtual parameters (P_{V}) depending on said virtual data,
- compare said actual parameters (P_{A}) and said predetermined parameters (P_{P}) so as to generate a first index of performance (FIᵢ) ,
- compare said virtual parameters (P_{V}) and said predetermined parameters (P_{P}) so as to generate a second index of performance (SIⱼ),
- generate said global index (GI) of performance depending on said first (FIᵢ) and second (SIⱼ) index of performance.
